# EUROPEAN PATENT APPLICATION

(11) **EP 2 679 804 A1**
(43) Date of publication of application: **01.01.2014**
(21) Application number: 12190143.3
(22) Date of filing: 26.10.2012
(51) Int. Cl.: F03D 1/06

(54) **A wind turbine blade having an inner truss element**

(71) Applicant: LM WP Patent Holding A/S, 6000 Kolding (DK)
(72) Inventor: Opadrishta, Venkata Harish, 560016 Bengaluru (IN); Patil, Shashidhar, 560066 Bangalore (IN); Majumder, Utsa, 560094 Bangalore (IN)
(74) Representative: Hussey, Paul Anthony

(57) **Abstract**

A wind turbine blade is described, wherein the blade has an internal truss web structure provided as an open-framed lattice structure, to provide shear support for the wind turbine blade. By providing the internal webs of the blade as a lattice of individual truss elements, as a result the total blade weight is reduced, along with the manufacture and assembly time of the blade. Furthermore, the internal truss web structure may be provided in a manner to improve installation into a wind turbine blade shell, by having improved adhesive properties to the blade shell surfaces.

## Description

### Field of the Invention

The present invention relates to a wind turbine blade having an internal truss element, providing for a blade of reduced weight while strong in shear.

### Background of the Invention

Traditional wind turbine blade designs comprise an outer shell of fibre-based composite material, which is reinforced by at least one continuous shear web extending between opposed pressure- and suction-side surfaces of the blade shell. Such shear webs are positioned on a first open shell of the blade with a first side of the web adhered to a central main laminate of the blade shell, with the second blade shell positioned above and adhered to a second side of the shear web. One of the challenges in wind turbine construction is ensuring a secure bond between the shear web and the blade shells. In addition, the continuous shear webs add considerably to the weight of the wind turbine blade.

US 7,891,949 describes a wind turbine blade having an internal structure having an array of transverse rib bulkheads with supporting spar members. The rib bulkheads define the airfoil profile of the blade, and provide support to an external skin of the blade. However, such a construction is relatively complicated, requiring an array of interconnections between various rib bulkheads, spar members, and skin panels. In addition, the interior of the wind turbine blade is obstructed by the presence of the transverse bulkheads, preventing any effective internal inspection of the blade interior.

Accordingly, it is an object of the invention to provide a wind turbine blade construction which has reduced weight, is relatively easier to manufacture, and has generally improved performance compared to prior art systems.

### Summary of the Invention

Accordingly, there is provided a wind turbine blade comprising an airfoil body formed from a blade shell element, the airfoil body having an upper suction-side surface and a lower pressure-side surface, a leading edge and a trailing edge, and a root end for mounting to a wind turbine hub and a distal tip end, the wind turbine blade further comprising at least one inner truss element provided within the interior of said blade shell element, said at least one inner truss element extending between the pressure-side surface and the suction-side surface of said blade shell element,
wherein said at least one inner truss element is formed from a continuous open-framed lattice extending in a spanwise direction from a first end proximate to said root end to a second end proximate to said tip end,
such that the interior of said wind turbine blade shell element is substantially clear and unobstructed substantially along the length of the wind turbine blade from said root end to said tip end.

Providing the inner truss element of a wind turbine blade as an open-framed lattice allows for a considerably lighter structure compared to prior art shear webs, and furthermore can provide for easier handling and installation during wind turbine blade manufacture. In addition, the absence of any transverse rib bulkheads in the blade interior allows for lighter structure, as well as allowing for easier inspection of the blade interior from the root end. The open internal structure also allows for relatively easier drainage or removal of any undesired substances from the blade interior, e.g. water, dirt, waste materials from the manufacturing process, as such material can pass unimpeded to the base of the blade at the root end.

Preferably, said at least one inner truss element comprises an upper rail provided at said suction-side surface of said blade shell element and a lower rail provided at said pressure-side surface, and a plurality of rods extending diagonally between said upper rail and said lower rail.

Arranging the rods of the truss element in a diagonal direction provides an improved bracing effect of the truss, allowing the truss element to better resist forces experienced by the wind turbine blade.

Preferably, said rods extend between said upper rail and said lower rail at an angle to said upper and lower rails of between 30-60 degrees, preferably approximately 45 degrees. Preferably, the rods are arranged to be loaded in shear only.

By providing the rods at a suitable angle to the rails, the rods may be loaded primarily in shear forces. Accordingly, the performance of the truss element can be optimised, wherein the components of the truss elements can be designed to bear the loads required for only shear loading.

Preferably, at least one of said upper and lower rails comprises a surface having a surface effect, wherein said surface is adhered to at least one of said pressure- and suction-side surfaces of said blade shell element, wherein said surface effect provides for secure adhesion between said surface of said rail and said surface of said blade shell element.

By providing the truss element with a surface effect, the truss element can be provided with improved adhesion compared to prior art systems, thereby resulting in a relatively easier manufacturing and assembly process when compared to prior art systems.

Preferably, said rails are pultruded, wherein said surface effect is created by a pultrusion operation.

The surface effect may comprise any suitable shaping, treatment, scoring or pattern formed on the surface which acts to provide improved adhesion to said surface.

Preferably, said plurality of rods extend in a spanwise direction.

Preferably, said plurality of rods are arranged such that at least a portion of adjacent rods overlap to form a cross-bracing arrangement of rods between said upper and lower rails.

The cross-bracing arrangement provides a lightweight structure which is capable of resisting considerable shear and torsional forces.

Preferably, said cross-bracing arrangement of rods extends in a spanwise direction.

Preferably, an upper spar cap is provided at the upper suction-side surface of said at least one inner truss element, and a lower spar cap is provided at the lower pressure-side surface of said at least one inner truss element.

The spar cap is a generally the primary structural component of the wind turbine blade, extending along the longitudinal or spanwise direction of the blade between the leading and trailing edges, at the pressure and suction sides of the blade. The spar cap can be easily coupled to the truss element for improved ease of manufacturing.

In a preferred embodiment, said blade comprises first and second inner truss elements, said truss elements extending in a substantially parallel direction along the spanwise or longitudinal direction of the wind turbine blade.

In this embodiment, the traditional construction of a leading edge and a trailing edge shear web may be easily replaced by the open-framed truss structure of the invention, resulting in a considerable saving in weight and manufacturing cost, while not requiring any significant alteration to existing wind turbine blade designs.

Preferably, the blade comprises at least one transverse bridging strut extending between said first and second inner truss elements.

The bridging elements extend between the first and second truss elements, preferably in a substantially edgewise or transverse direction, to provide for additional reinforcement of the truss element construction.

Preferably, an upper spar cap extends between said first and second inner truss elements at said upper suction-side surface and a lower spar cap extends between said first and second inner truss elements at said lower pressure-side surface.

As the spar caps extend between the upper and lower sides of the truss elements, this provides for a structure having increased rigidity and stability. It will be understood that the spar caps may extend beyond either side of the truss elements.

Preferably, said plurality of rods have a diameter of between 25-50mm, preferably approximately 35mm. The rods may comprise cylindrical rods, square rods, etc. Preferably, said rails have a cross-sectional area of approximately 25cm².

Preferably, said rods and/or said rails are formed from pultruded elements, preferably pultruded fibrous composites e.g. glass fibre, carbon fibre, steel fibre, etc. Preferably, the pultrusions are a combination of unsaturated polyester and fibreglass.

The use of pultruded elements provides for a low-weight, high-strength construction, which may be relatively easily manufactured and assembled. Alternatively, it will be understood that the rods and/or said rails may be formed from any suitable material, e.g. metal, such as aluminium.

Preferably, said wind turbine blade is at least 40 metres in length.

There is further provided a wind turbine comprising at least one wind turbine blade as described above.

There is also provided a method of manufacturing a wind turbine blade, the method comprising the steps of:
providing a first blade shell substantially forming an upper suction-side of an airfoil body for a wind turbine blade;
providing a second blade shell substantially forming a lower pressure-side of an airfoil body for a wind turbine blade;
providing at least one inner truss element in the form of a continuous open-framed lattice;
fixing said at least one inner truss element to an inner surface of one of said first and second blade shells, such that said at least one inner truss element extends in a spanwise direction from a first end proximate a root end of said shell to a second end proximate a tip end of said shell; and
closing said first and second blade shells to form a wind turbine blade comprising an airfoil body having a suction side surface and a pressure side surface, said at least one inner truss element extending between said first blade shell and said second blade shell, wherein the interior of said wind turbine blade is substantially clear and unobstructed substantially along the length of the wind turbine blade from said root end to said tip end.

The use of an open-framed lattice structure instead of traditional shear webs provides for a reduction in overall blade weight, without compromising on blade strength and buckling resistance. Such a truss structure may be relatively easily manufactured and assembled, at a lower cost than traditional shear webs. It will be understood that the first and second blade shells may be bonded together to form the wind turbine blade body, wherein the at least one truss element is secured between the inner surfaces of the shells.

Preferably, the method comprises the step of constructing said at least one inner truss element by providing an upper rail and a lower rail and a plurality of rods extending therebetween.

Preferably, said step of constructing comprises providing said plurality of rods as a plurality of pultruded elements, preferably pultruded fibrous composite elements.

Preferably, said step of constructing comprises securing said plurality of rods to said upper and lower rails.

Preferably, a first channel is defined in said upper rails and a second channel is defined in said lower rail, wherein said step of constructing comprises receiving respective free ends of said plurality of rods in respective first and second channels of said rails and securing said respective free ends to said rails.

Such a construction of truss elements allows for the truss rods to be slotted into the channels formed in the rails, which can provide for a relatively easier construction. The width of the channels may be dimensioned to accommodate the free end of a single rod, or the free ends of a plurality of rods, preferably two, arranged side-by-side in the channel. The free ends of the rods can then be secured to the rails by any suitable technique, e.g. bolting, clamping, riveting, hooking, a snap-fit connection, etc. Preferably, the method further comprises the step of providing at least one spar cap coupled to said at least one inner truss element.

The combination of at least one spar cap and at least one truss element may be manufactured external to the wind turbine blade shell, thereby allowing for the manufacturing of different blade components in parallel, reducing overall cycle time of the blade construction.

Preferably, the method comprises the step of fixing an upper spar cap and a lower spar cap to said at least one inner truss element, said upper spar cap for connection to said first blade shell and said lower spar cap for connection to said second blade shell.

It will be understood that the upper spar cap may be affixed to the first blade shell substantially forming an upper suction-side of an airfoil body for the wind turbine blade, and the lower spar cap may be affixed to the second blade shell substantially forming a lower pressure-side of an airfoil body for the wind turbine blade.

In one aspect, the method comprises the step of providing a first inner truss element for location towards the leading edge of the wind turbine blade and a second inner truss element for location towards the trailing edge of the wind turbine blade.

Preferably, the method comprises the step of providing at least one spar cap extending at least between said first and second inner truss elements.

In one aspect, the method comprises the step of fixing at least one transverse bridging strut between said first and second inner truss elements.

In one aspect, the step of constructing comprises forming a root end connecting element between said first and second inner truss elements at said first end.

Said root end connecting element may comprise an open-framed lattice construction linking the first and second truss elements.

Preferably, said rails are curved along the longitudinal direction, such that said rails align with blade shells for a pre-bent wind turbine blade.

### Description of the Invention

Embodiments of the invention will now be described, by way of example only, with reference to the accompanying drawings, in which:
Fig. 1 shows a wind turbine;
Fig. 2 shows a schematic view of a wind turbine blade;
Fig. 3 shows a schematic view of an airfoil profile of a wind turbine blade;
Fig. 4 is a perspective view of a first shell of a wind turbine blade according to an embodiment of the invention having a pair of inner truss elements;
Fig. 5 is a side plan view of the truss elements of Fig. 4;
Fig. 6 is a perspective view of the truss elements of Fig. 4;
Fig. 7 is an enlarged view of a section of the truss elements of Fig. 6;
Fig. 8 is an enlarged plan view of a lower portion of a truss element according to an aspect of the invention; and
Fig. 9 is a perspective view of the lower portion of the truss element of Fig. 8.

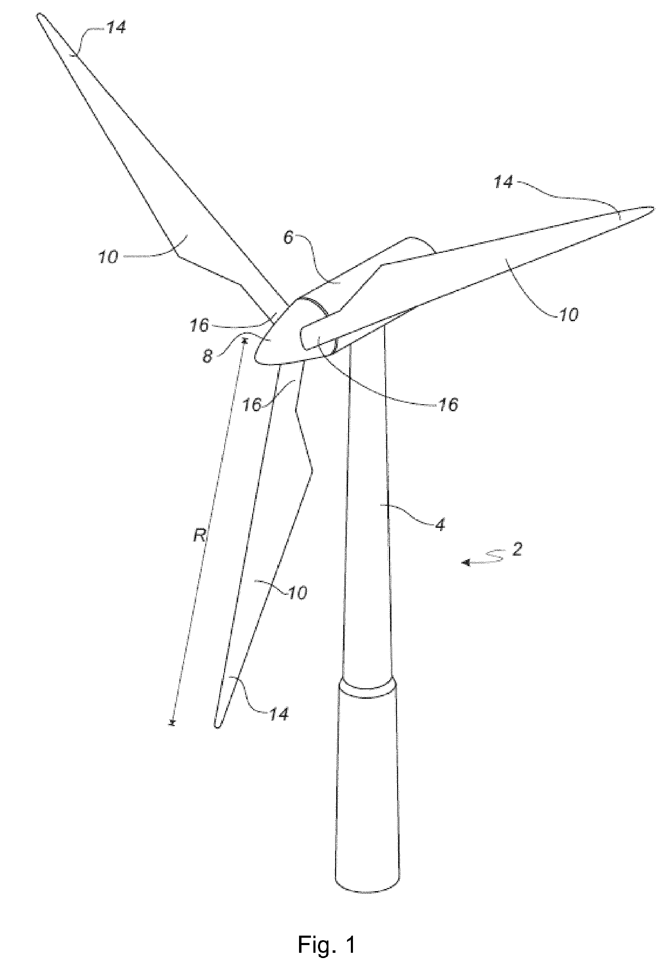

Fig. 1 illustrates a conventional modem upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8. The rotor has a radius denoted R.

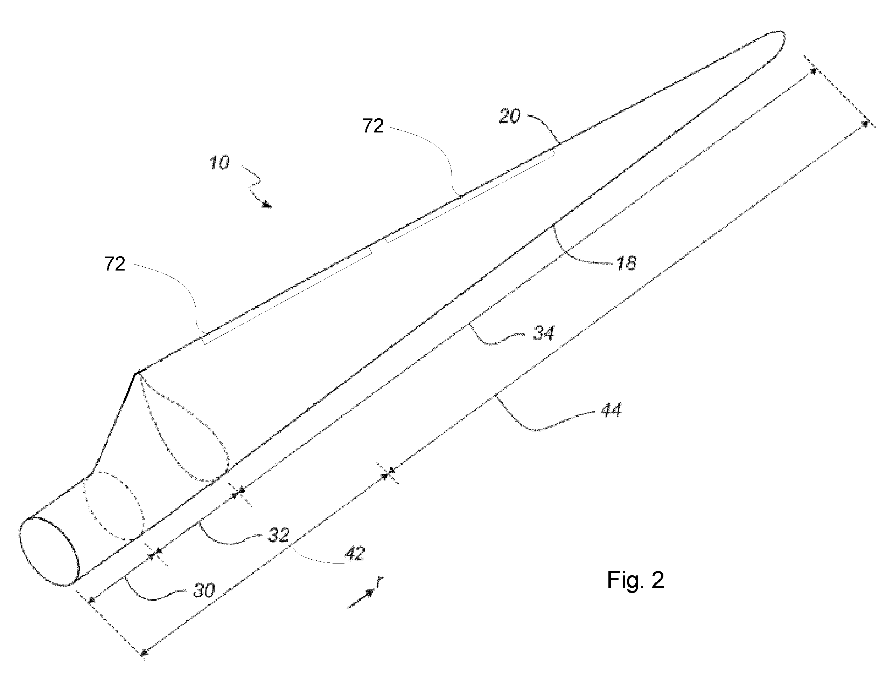

Fig. 2 shows a schematic view of a first embodiment of a wind turbine blade 10 which may be used according to an embodiment of the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

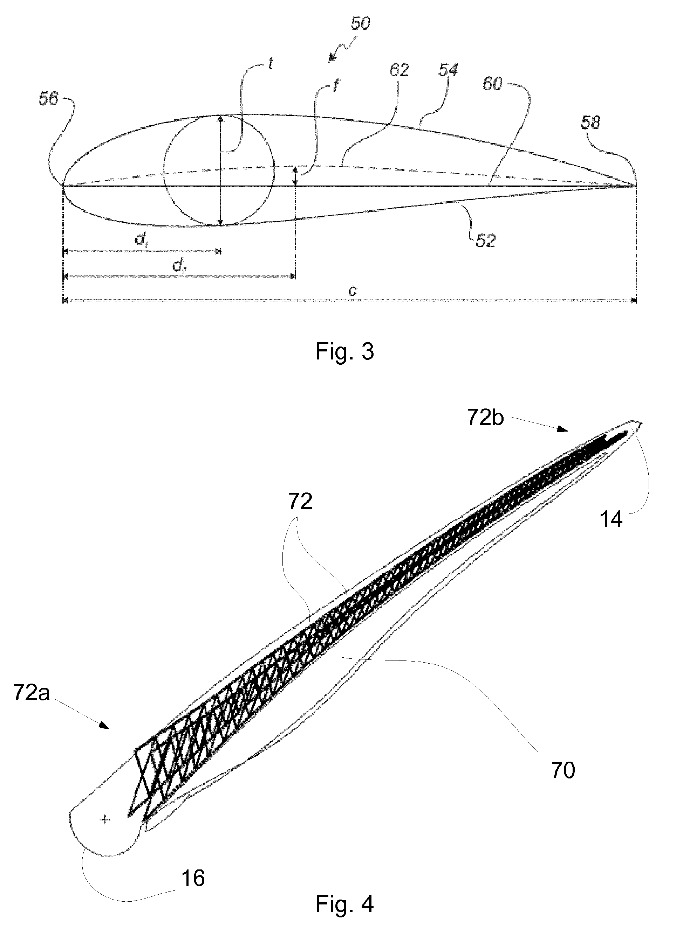

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 is typically constant along the entire root area 30. The transition region 32 has a transitional profile 42 gradually changing from the circular or elliptical shape of the root region 30 to the airfoil profile 50, as shown in Fig. 3, of the airfoil region 34. The chord length of the transition region 32 typically increases substantially linearly with increasing distance r from the hub.

The airfoil region 34 has an airfoil profile 50 with a chord extending between the leading edge 18 and the trailing edge 20 of the blade 10. The width of the chord decreases with increasing distance r from the hub.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

Fig. 3 shows a schematic view of an airfoil profile 50 of a typical blade of a wind turbine depicted with the various parameters which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber f. The asymmetry can also be defined by use of parameters called the upper camber and lower camber, which are defined as the distances from the chord 60 and the suction side 54 and pressure side 52, respectively.

Airfoil profiles are often characterised by the following parameters: the chord length c, the maximum camber f, the position df of the maximum camber f, the maximum airfoil thickness t, which is the largest diameter of the inscribed circles along the median camber line 62, the position dt of the maximum thickness t, and a nose radius (not shown). These parameters are typically defined as ratios to the chord length c.

Wind turbine blades are generally formed from fibre-reinforced plastics material, i.e. glass fibres and/or carbon fibres which are arranged in a mould and cured with a resin to form a solid structure. Modern wind turbine blades can often be in excess of 30-40 metres in length, having blade root diameters of several metres.

Generally, wind turbine blades are manufactured as separate shell parts, which are subsequently assembled together to form the wind turbine blade structure. In preferred techniques, the wind turbine blade is assembled from at least one shell member substantially forming an upwind or pressure-side surface of a wind turbine blade profile, and at least one shell member substantially forming a downwind or suction-side surface of a wind turbine blade profile. The invention is described in terms of such wind turbine blade constructions having upwind and downwind shell members, but it will be understood that the invention may equally apply to other general blade manufacturing techniques, e.g. wherein a blade is constructed from assembly of at least one shell for a blade leading edge and at least one shell for a blade trailing edge.

Fig. 4 illustrates a shell 70 of a wind turbine blade 10 according to the invention, wherein a pair of inner truss elements 72 are arranged on an internal surface of the shell 70. The inner truss elements 72 extend from a first end 72a located proximate the root end 16 of the wind turbine blade 10 and a second end 72b located proximate the tip end 14 of the wind turbine blade 10.

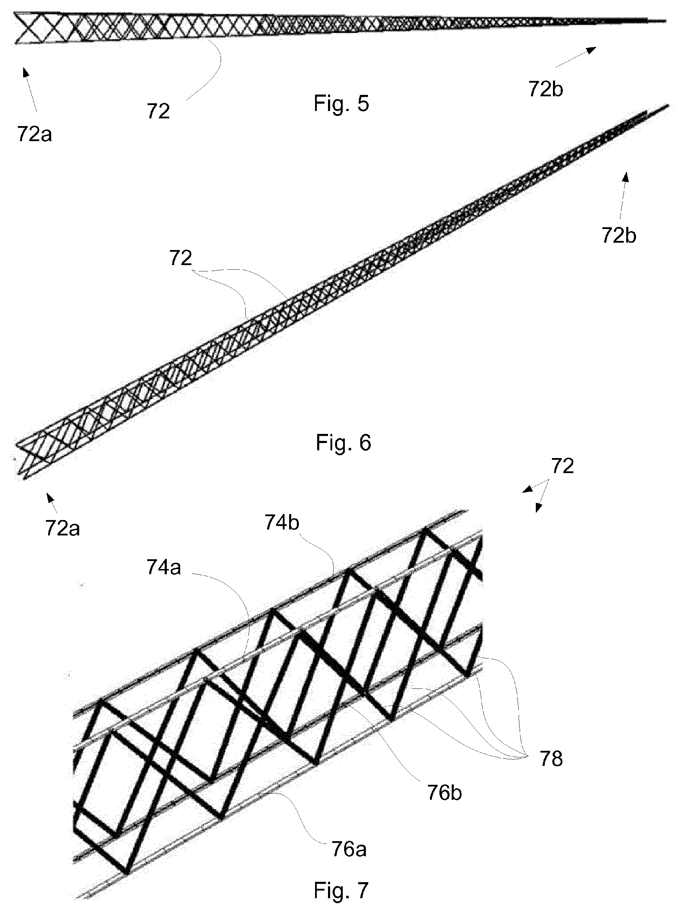

With reference to Figs. 5-8, the inner truss elements 72 comprises respective first and second upper rails 74a,74b and respective first and second lower rails 76a,76b, the rails 74a,74b,76a,76b extending between the first and second ends 72a,72b of the truss elements 72. The inner truss elements 72 further comprise an array of rods 78, a first plurality of said rods 78 extending between respective first upper and lower rails 74a,76a and a second plurality of said rods 78 extending between respective second upper and lower rails 74b,76b.

The rods 78 are preferably arranged such that the rods 78 are only loaded in shear forces. In the embodiment shown, the rods 78 extend in a diagonal between the respective rails 74a,74b,76a,76b, at an angle to said rails of approximately 45 degrees. In the embodiment shown, adjacent rods 78 are arranged to overlap with one another as they extend between respective rails 74a,74b,76a,76b, forming a cross-brace arrangement between the rails 74a,74b,76a,76b. Such a construction provides a reinforcement of the structure of the inner truss element 72.

It will be understood that a further plurality of bracing rods (not shown) may extend between attachment points provided on the pair of inner truss elements 72 shown, thereby forming a greater truss structure, the bracing rods acting as reinforcement elements between the adjacent inner truss elements 72 and ensuring the parallel alignment of the adjacent inner truss elements 72.

In a further aspect, a root end connector (not shown) may be provided towards the first end 72a of the truss elements 72 to be located proximate the root end 16 of the wind turbine blade 10, the root end connector comprising an open-framed lattice structure extending between adjacent truss elements 72 at said first end 72a, to provide a coupling between adjacent inner truss elements 72 at the root end 16 of the blade 10.

During construction of the wind turbine blade 10, a first wind turbine blade shell 70 is provided. Preferably, the blade shell 70 is formed from a moulding procedure of a fibrous-based material in a blade mould, wherein resin-infused fibre material is cured to form a composite shell. The truss elements 72 may be constructed separate to the moulding and curing of said blade shell 70, the constructed truss elements 72 then positioned in the shell 70 substantially along the length of the shell 70, wherein the lower rails 76a,76b are adhered or bonded to the internal surface of the shell 70, to secure the truss elements 72 to the blade shell 70. A second wind turbine blade shell (not shown) is provided from a parallel moulding and curing process, which can then be positioned above the first shell 70 and the truss elements 72, to close the shells to form a wind turbine blade 10. In this regard, the upper rails 74a,74b of the truss elements 72 are adhered or bonded to the inner surface of the second shell, to ensure that the truss elements 72 extend between and are securely attached to the inner surfaces of the opposed shells. The truss elements 72 provide lightweight shear support for the wind turbine blade 10, while also providing a substantially unobstructed and clear blade interior, allowing for easy inspection and drainage of the interior of the blade 10.

In a further aspect of the invention, at least one spar cap (not shown) may be affixed to a portion of at least one of the upper and/or lower rails 74a,74b,76a,76b of the truss elements 72, external to said blade shell 70. Accordingly, the truss elements 72 including the attached spar cap may be bonded to the interior of the blade shell 70. Such a process may improve blade manufacture cycle time, as the spar cap, which may form part or all of a main blade structural laminate, can be manufactured separate to the blade moulding step of a blade manufacturing process.

While the embodiment shown in the figures illustrates a wind turbine blade 10 having a pair of inner truss elements 72, it will be understood that any number of inner truss elements may be provided.

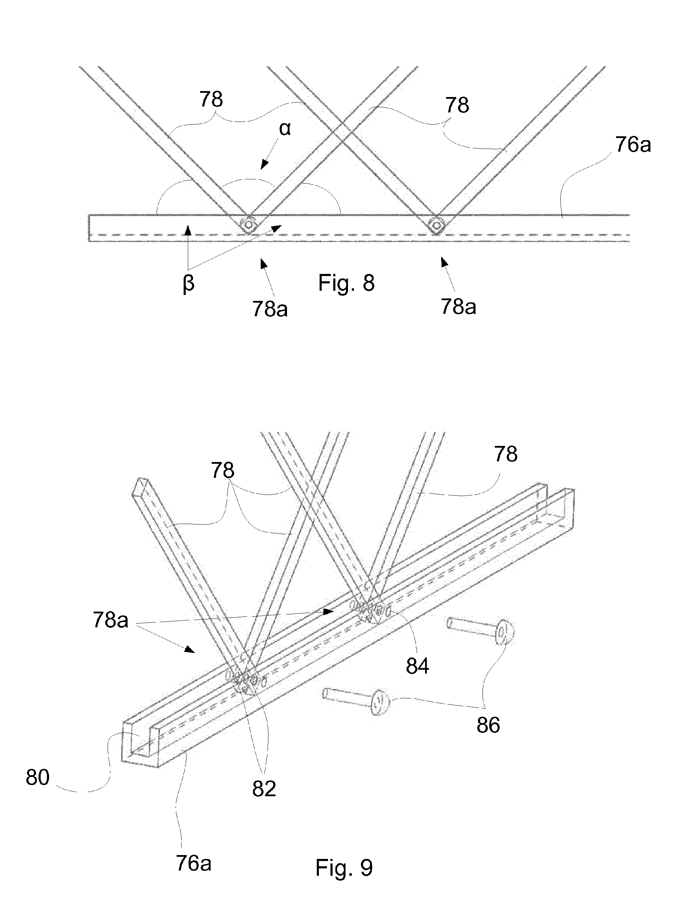

With reference to Figs. 8 and 9, enlarged views of the attachment points between a plurality of rods 78 and a first lower rail 76a are shown. A channel 80 is defined in said rail 76a, the channel 80 arranged to receive a first end 78a of the plurality of rods 78. A bolt aperture 82 is defined in said first end 78a of said plurality of rods 78, with at least one corresponding bolt aperture 84 defined in a side of said rail 76a, extending to said channel 80, the bolt apertures 82,84 arranged to receive a bolt 86 which is used to secure said first end 78a of said rods 78 in said channel 80.

In the embodiment shown, the channel 80 is arranged such that the width of the channel 80 can accommodate the thickness of two of said rods 78, such that the first ends 78a of said two rods 78 may be co-located at the same point along the length of said channel 80. Accordingly, a bolt 86 to secure said rods 78 to said rail 76a can be arranged to pass through a first of said bolt apertures 84 defined on said rail 76a, and through the corresponding bolt apertures 82 defined at the co-located first ends 78a of the rods 78.

Preferably, the rods 78 are arranged such that the angle α between co-located rods 78 is approximately 90 degrees, wherein the rods 78 extend from said rail 76a at an angle β of approximately 45 degrees. Such a construction ensures that the rods 78 are loaded in shear forces, with a minimum of other structural loading. It will be understood however that any suitable arrangement of rods 78 may be provided, preferably wherein angle β is between 30-60 degrees.

In the embodiment shown, the rods 78 are arranged such that a cross-bracing arrangement is formed by overlapping rods extending between the upper and lower rails 74a,76a. This arrangement provides for improved shear strength, without the requirement of additional reinforcing braces.

It will be understood that the truss elements 72 may be formed as a collection of separate elements assembled together into a single structure, for example, the rails 74a,74b,76a,76b and/or the rods 78 may be formed as separate members which are coupled together to form said rails and/or rods. The separate members may be coupled using any suitable technique, e.g. bonding, bolting, welding, snap-fit coupling, etc.

In a preferred aspect of the invention, the truss elements may be formed as pultruded elements, e.g. pultruded fibre-based elements. However, it will be understood that the components of the truss elements may be formed from any suitable material, e.g. metals, such as aluminium.

In one preferred embodiment, the pultruded rails 76a,76b are formed from a pultrusion process to have a surface effect on at least one surface, wherein said surface effect aids in the adhesion or bonding of said at least one surface to an opposed surface. Preferably, the at least one surface is the surface that is bonded to an internal surface of a blade shell of a wind turbine blade. Such a surface effect may comprise a roughened surface, an undulating surface, a rippled surface, a channelled surface, a riveted surface, or any suitable shaping, treatment, scoring or pattern formed on the surface which acts to provide improved adhesion for a surface. By providing such a surface effect as a part of the pultrusion process, the truss elements can be instantly provided with improved adhesion properties, when compared to prior art shear webs, which require post-processing techniques in order to provide such a roughed surface suitable for adhesion, e.g. by sanding, grinding, or scoring the bonding surface of the shear webs.

In a further aspect of the invention, the truss elements 72 may be provided as separate truss element sections divided along the longitudinal length of the truss elements 72. Such a construction may allow for the use of truss elements 72 according to the invention in the construction of modular wind turbine blades, wherein a wind turbine blade is assembled from a selection of modular blade sections, e.g. a root section, an aerodynamic section, a tip section, etc.

In a further aspect of the invention, it will be understood that the inner truss elements 72 may be curved along the longitudinal direction of the truss elements 72, such that the truss elements 72 will align with the desired shaped of the completed wind turbine blade, for example a blade having a pre-bent shape to allow for blade deflection during wind turbine operation. Such a curved shape may be provided through appropriate curvature of the rails 74a,74b,76a,76b and/or the rods 78 to comply with the shape of the wind turbine blade shells.

The use of a truss element to provide shear support in a wind turbine blade allows for the construction of wind turbine blades of lighter weight and which allow for improved adhesion of blade components and easier internal inspection. Furthermore, the simplified construction of the truss element structure allows for easier assembly, resulting in a reduction of overall blade constructional time.

The invention is not limited to the embodiment described herein, and may be modified or adapted without departing from the scope of the present invention.

## Claims

1. A wind turbine blade comprising an airfoil body formed from a blade shell element, the airfoil body having an upper suction-side surface and a lower pressure-side surface, a leading edge and a trailing edge, and a root end for mounting to a wind turbine hub and a distal tip end, the wind turbine blade further comprising at least one inner truss element provided within the interior of said blade shell element, said at least one inner truss element extending between the pressure-side surface and the suction-side surface of said blade shell element,
wherein said at least one inner truss element is formed from a continuous open-framed lattice extending in a spanwise direction from a first end proximate to said root end to a second end proximate to said tip end,
such that the interior of said wind turbine blade shell element is substantially clear and unobstructed substantially along the length of the wind turbine blade from said root end to said tip end.

2. The wind turbine blade of claim 1, wherein said at least one inner truss element comprises an upper rail provided at said suction-side surface of said blade shell element and a lower rail provided at said pressure-side surface, and a plurality of rods extending diagonally between said upper rail and said lower rail.

3. The wind turbine blade of claim 2, wherein said rods extend between said upper rail and said lower rail at an angle to said upper and lower rails of between 30-60 degrees, preferably approximately 45 degrees.

4. The wind turbine blade of claim 2 or claim 3, wherein at least one of said upper and lower rails comprises a surface having a surface effect, wherein said surface is adhered to at least one of said pressure- and suction-side surfaces of said blade shell element, wherein said surface effect provides for secure adhesion between said surface of said rail and said surface of said blade shell element.

5. The wind turbine blade of claim 4, wherein said rails are pultruded, wherein said surface effect is created by a pultrusion operation.

6. The wind turbine blade of any one of claims 2-5, wherein said plurality of rods are arranged such that at least a portion of adjacent rods overlap to form a cross-bracing arrangement of rods between said upper and lower rails.

7. The wind turbine blade of any one of claims 2-6, wherein said rods and/or said rails are formed from pultruded elements, preferably pultruded fibrous composites

8. The wind turbine blade of any preceding claim, wherein said blade comprises first and second inner truss elements, said truss elements extending in a substantially parallel direction along the spanwise direction of the wind turbine blade.

9. A wind turbine comprising at least one wind turbine blade as claimed in any one of claims 1-8.

10. A method of manufacturing a wind turbine blade, the method comprising the steps of:
providing a first blade shell substantially forming an upper suction-side of an airfoil body for a wind turbine blade;
providing a second blade shell substantially forming a lower pressure-side of an airfoil body for a wind turbine blade;
providing at least one inner truss element in the form of a continuous open-framed lattice;
fixing said at least one inner truss element to an inner surface of one of said first and second blade shells, such that said at least one inner truss element extends in a spanwise direction from a first end proximate a root end of said shell to a second end proximate a tip end of said shell; and
closing said first and second blade shells to form a wind turbine blade comprising an airfoil body having a suction side surface and a pressure side surface, said at least one inner truss element extending between said first blade shell and said second blade shell, wherein the interior of said wind turbine blade is substantially clear and unobstructed substantially along the length of the wind turbine blade from said root end to said tip end.

11. The method of claim 10, wherein the method comprises the step of constructing said at least one inner truss element by providing an upper rail and a lower rail and a plurality of rods extending therebetween.

12. The method of claim 11, wherein said step of constructing comprises providing said plurality of rods as a plurality of pultruded elements, preferably pultruded fibrous composite elements.

13. The method of claim 11 or claim 12, wherein said step of constructing comprises securing said plurality of rods to said upper and lower rails.

14. The method of any one of claims 11-13, wherein a first channel is defined in said upper rails and a second channel is defined in said lower rail, wherein said step of constructing comprises receiving respective free ends of said plurality of rods in respective first and second channels of said rails and securing said respective free ends to said rails.

15. The method of any one of claims 10-14, wherein the method comprises the step of forming a root end connecting element between said first and second inner truss elements at said first end.
